# EUROPEAN PATENT SPECIFICATION

(11) **EP 0 357 829 B1**
(45) Date of publication and mention of the grant of the patent: **30.11.1994**
(21) Application number: 88114777.1
(22) Date of filing: 09.09.1988
(51) Int. Cl.: H01F 23/00

(54) **Non-contacting power supplying system**
Vorrichtung zur berührungslosen Energieübertragung
Dispositif de transmission sans contact d'énergie électrique

(43) Date of publication of application: 14.03.1990
(73) Proprietor: TOPPAN MOORE COMPANY, LTD., Chiyoda-ku, Tokyo 101 (JP)
(72) Inventor: Sano, Shigeaki, Fuchu-shi, Tokyo (JP)
(74) Representative: Schaumburg, Thoenes & Thurn

(56) References cited:
- WO-A-84/04212
- DE-A- 2 033 682
- FR-A- 2 566 572
- GB-A- 1 599 412
- US-A- 3 549 990
- US-A- 4 236 086
- Soviet Inventions Illustrated Derwent week 8715,published 22-04-1987,London& SU-A-1251-193 (Petrodvorets Clock)

## Description

The present invention relates to a non-contacting power supplying and receiving system according to the generic part of the main claim. A system of this kind is described in WO-A- 84 04 212.

Although power supplying to an electric apparatus is usually performed by electrical connection through electric terminals, for a portable or enclosed electric or electronic apparatus of small size, continuous power supplying is accomplished by recharge of chargeable battery or exchange of non-chargeable battery, somewhat successfully in practice.

However, so far as the apparatus is concerned, for which it is difficult to provide external electric terminals for battery recharge or to provide an access port for battery exchange, use of electric or electronic circuitry must be relinquished or the apparatus itself must be exchanged rather than recharging or exchanging the battery when the latter has been fully consumed. Even when the electric or electronic apparatus is concerned, for which the operation of said recharging or exchanging of the battery is relatively easy, it is required to continuously monitor a degree at which the battery being used has been consumed. Accordingly, when the electric or electronic circuitry of a high power consumption relative to the battery capacity should be energized, a monitoring circuit provided for said continuous monitoring will disadvantageously further increase the power consumption.

Even the apparatus to which the power supplying is accomplished through electrical terminals, useful life and reliability of such electric terminals should be considered when these electric terminals are coupled as frequently as once to several times every day. Specifically, the reliability of the electric terminals is generally guaranteed for tens to hundreds of coupling thereof and therefore the guaranteed times of coupling may be exceeded as early as after one to two years depending upon a frequency of use. Under the existing circumstances, this problem of reliability has been unwillingly neglected.

In the known system, the power supplying coil and the power receiving coil constitute together a transformer of open magnetic path type with the power supplying coil serving as a primary side and the power receiving coil serving as a secondary side. To minimize the leakage flux, it is desirable to use a frequency as low as possible, because a voltage drop between primary and secondary side is proportional to the frequency, as well known. With a low frequency, the power supplying and receiving coils must have a higher inductance to maintain a high impedance. However, this will disadvantageously lead to an increased leakage inductance and thereby to a reduced power transmission efficiency.

The problem to be solved by the invention is to enhance the known system so that power transmission efficiency is improved without increasing the leakage inductance.

The invention solves this problem by the features of anyone of claims 1, 3, 5 and 8. Advantageous further developments are specified in subclaims.

The present invention provides a capacitor connected in parallel with the power supplying coil so that an impedance in the direction starting from the secondary side of the transformer may be increased by a resonance phenomenon during a period of power supplying. The resonance energy is directed to the load, collectively improving the power supplying efficiency.

WO-A- 84 04 212 describes a non-contacting power supplying and receiving system having a capability comparable to the conventional system adapted for power supplying through the ordinary electrical connection. This system enables a relatively high electric power to be transmitted at a high efficiency in non-contacting fashion. It maintains the electrical connection in non-contacting condition and therefore is very useful for electric equipment or apparatus placed in an environment which must be extremely clean, an environment which is, in contrast with said environment, extremely severe, an enclosed environment, or in an inflammable or explosive atmosphere and the other equipments or devices to which the power supply through the ordinary electrical connection is difficult.

The invention will be further described with reference to the accompanying drawings.
Fig. 1 is a vertical sectional view illustrating a first embodiment of the invention;
Fig. 2 is a circuit diagram of the embodiment illustrated by Fig. 1;
Fig. 3 is a frontal view of a power receiving coil 54;
Fig. 4 is a middle sectional view;
Fig. 5 is a circuit diagram illustrating an equivalent circuit for magnetic coupling section;
Fig. 6 is a characteristic diagram of magnetic coupling;
Fig. 7 is a vertical sectional view illustrating a second embodiment of the invention;
Fig. 8 is a circuit diagram of the embodiment illustrated by Fig. 7;
Fig. 9 is a vertical sectional view illustrating a third embodiment of the invention;
Fig. 10 is a circuit diagram of the embodiment illustrated by Fig. 9;
Fig. 11 is a vertical sectional view illustrating a fourth embodiment of the invention; and
Fig. 12 is a circuit diagram of the embodiment illustrated by Fig. 11.

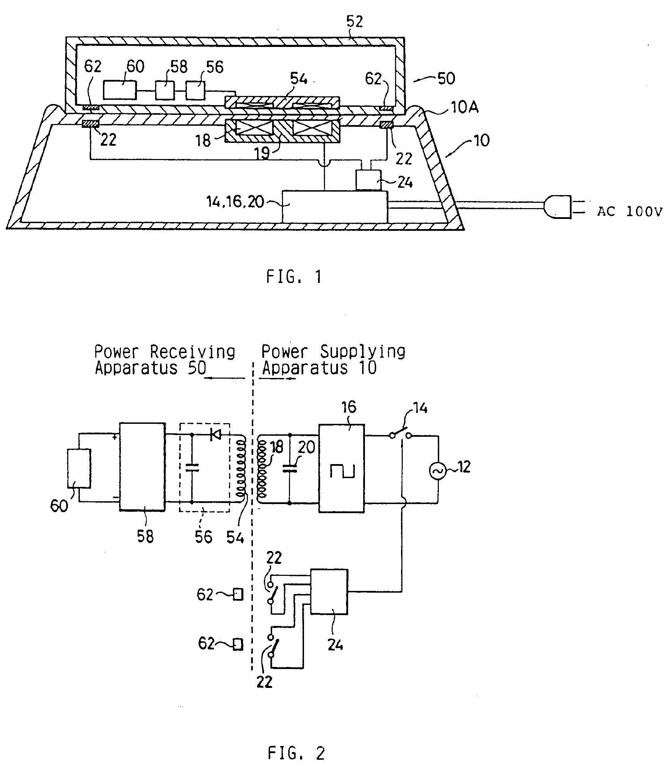

Fig. 1 illustrates, in a vertical section, an embodiment of the invention as in condition of power supplying or ready therefor and Fig. 2 illustrates a circuit arrangement of this embodiment. Reference numeral 10 designates a power supplying apparatus and 50 designates a portable terminal apparatus as a power receiving apparatus. In the power supplying apparatus 10, reference numeral 12 designates a commercial AC source, 14 a normally opened switch as a source switch or a power supply initiating switch, 16 a frequency converter of phase control type adapted to convert an AC voltage supplied from said commercial AC source 12 to an AC voltage of a predetermined high frequency as will be described later, 18 a power supplying coil, and 20 a capacitor adapted to improve a power transmission efficiency through magnetic coupling of the power supplying coil 18 and a power receiving coil 54 as will be also described later.

The terminal apparatus 50 includes within an enclosed housing 52 said power receiving coil 54 adapted to be magnetically coupled to the power supplying coil 18, a smoothing circuit 56 to rectify and smooth the AC voltage supplied from the power receiving coil 54, a chargeable battery 58 adapted to be charged with a DC voltage supplied from the smoothing circuit 56, and an electric circuit 60 to effect the function of the terminal apparatus 50.

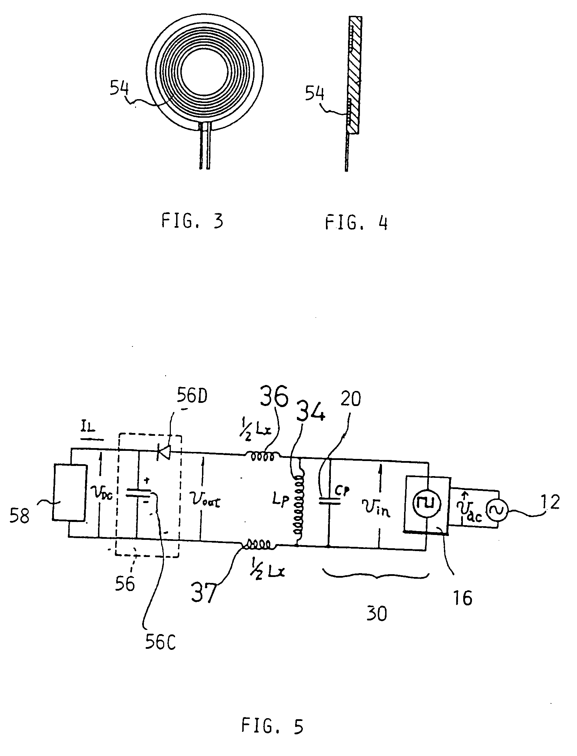

The power supplying coil 18 is wound around a ferrite core 19 which is, in turn, preferably not exposed out of a housing 10A of the power supplying apparatus 10 in order to avoid its external damage but should be positioned adjacent the power receiving coil 54 of the terminal apparatus 50 as closely as possible, after the terminal apparatus 50 has been set up, in order to enhance the magnetic coupling effect to said power receiving coil 54. As the power receiving coil 54, it is preferred to adopt a thin type coil which facilitates an efficient interlinkage of the magnetic flux developed from the power supplying coil 18 with the power receiving coil 54. More particularly, the power receiving coil 54 preferably comprises a flat sheet coil consisting of a disc-like core and a single layer or several layers of coil component formed, for example, by printing on the side of said disc-like core facing the power supplying apparatus 10. Fig. 3 is a front view of such sheet coil and Fig. 4 is a vertical sectional view taken along its middle plane.

From a viewpoint of the magnetic coupling efficiency, the power supplying coil 18 preferably has a diameter which is equal to or less than the effective diameter or the minimum diameter of the power receiving coil 54.

The power supplying coil 18 and the power receiving coil 54 constitute together a transformer of open magnetic path type with said power supplying coil 18 serving as a primary side and said power receiving coil 54 serving as a secondary side. An electric circuit equivalent thereto is shown by Fig. 5. The open magnetic path allows a considerable leakage flux to be present and a leakage inductance Lₓ caused thereby results in a voltage drop between a primary side voltage Vᵢₙ and a secondary side voltage Vₒᵤₜ, as will be apparent from the equivalent circuit in Fig. 5. Accordingly, it is desired to minimize said leakage flux. It is desirable to use a frequency as low as possible, because said voltage drop is proportional to the frequency, as well known. However, to avoid undesired magnetostrictive oscillation sound, the frequency to be used must be in the order of 15 KHz or higher. Although a converter 16 is so adjusted to produce a rectangular wave of 15 through 25 KHz in view of the requirements as mentioned above, it should be noted here that a higher frequency is sometimes preferable in connection with a magnetic coupling efficiency, depending upon a distance between the coils 18 and 54.

With the frequency having been set to a lower level, on the other hand, the coils 18 and 54 must have a higher inductance to maintain a high impedance in the direction from the smoothing circuit 56 to the power receiving coil 54. However, this will disadvantageously lead to an increased leakage inductance and thereby to a reduced power transmission efficiency. To solve this problem, the present embodiment provides a capacitor 20 connected in parallel with the power supplying coil 18 so that an impedance in the direction starting from the secondary side of the transformer (consisting of the coil 18 and the coil 54) may be increased by a resonance phenomenon during a period of power supplying. In other words, a value Cₚ of the capacitor 20 is selected so that, in the equivalent circuit as shown by Fig. 5, an inductance 34 and the capacitor 20 in the state of power supplying resonate in parallel at a frequency higher than that of the current applied to said power supplying coil 18. As a result of such selection, the capacitor 20 and the inductance 34 form a source of the resonance frequency f_{R} and the resonance energy is directed to a load, collectively improving the power supplying efficiency.

Reference numerals 36, 37 designate inductances having a value corresponding to a half of the leakage inductance Lₓ. Reference numeral 56D designates a rectifying diode, and 56C a smoothing capacitor. A chargeable battery 58 is charged with a DC voltage V_{DC} supplied from the smoothing circuit 56.

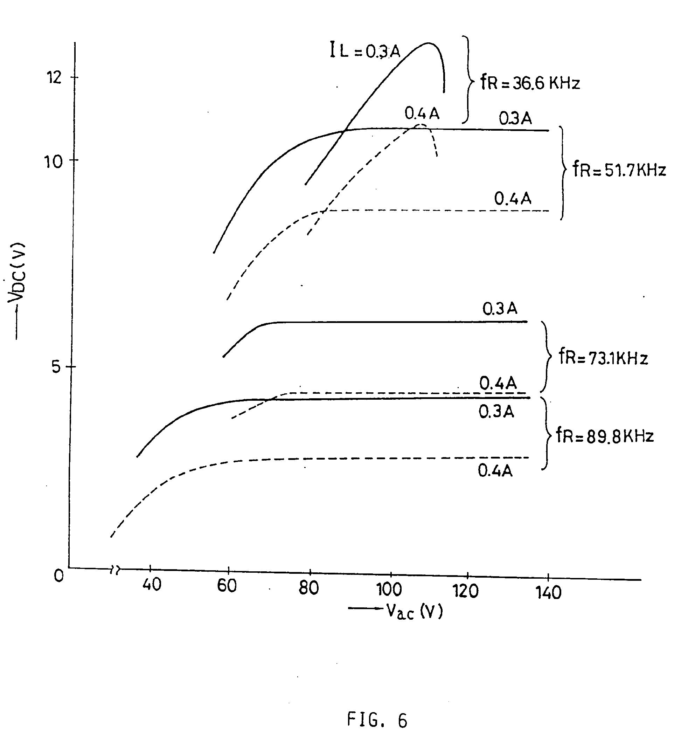

It has been experimentarily found that, when the coils 18, 54 are spaced from each other by 3 mm, the output AC voltage V_{ac} of the converter 16 is 100 V, and the output frequency fₒ of said converter 16 is 25 KHz, the output DC voltage V_{DC} and the load current I_{L} of the smoothing circuit 56 shown by Fig. 5 exhibit characteristics as shown by Fig. 6 with respect to the resonance frequency f_{R} provided by the capacitor 20. When the resonance frequency f_{R} was set to a level as low as approximately 1.5 times of the output frequency fₒ of the converter 16, the DC voltage V_{DC} was readily affected by a variation in the AC voltage V_{ac} at the input. However, when the capacity of the capacitor 20 was selected so that the resonance frequency f_{R} is 1.5 times or higher, particularly in the order of 2 fₒ, a stable power in the order of 3 VA was obtained from the smoothing circuit 56 in spite of any possible variation in the AC voltage. As will be appreciated from Fig. 6, oscillation at a frequency of 2 fₒ was optimal. More specifically, the maximum output of 3.6 W was obtained when the AC source 12 was set to provide an output voltage V_{ac} of 100 V and an output current of 0.4 A. The output in the order of 3 VA was obtained at a power transmission efficiency of approximately 40%. This is a capability comparable to that as achieved in the normal electrical connection fashion.

With the arrangement of Fig. 1, power supply from the power supplying apparatus 10 to the power receiving apparatus 50 can be started only after proper placement of said power receiving apparatus 50 on top of said power supplying apparatus 10. To this end, according to the embodiment as shown in Fig. 1, the surface of the power receiving apparatus 50 facing the power supplying apparatus 10 is provided at single or plural locations with magnets 62, 62 embedded therein while the surface of the power supplying apparatus 10 facing the power receiving apparatus 50 is provided at the corresponding locations with reed switches 22, 22 adapted to be closed in response to said magnets 62, 62 in order to determine whether the power receiving apparatus 50 (particularly the power receiving coil 54 thereof) is properly opposed to the power supplying apparatus 10 (particularly the power supply coil 18 thereof). Upon closure of all the reed switches 22, a switch control circuit 24 generates a switch closing signal with which the switch 14 is closed. Closure of the switch 14 activates the frequence converter 16 and thereby power supply to the power receiving apparatus 50 occurs through magnetic coupling of the power supplying coil 18 and the power receiving coil 54.

In this manner, only after the power receiving apparatus 50 has been properly placed, the magnets 62 and the corresponding reed switches 22 cause the switch control circuit 24 to generate the switch closing signal and the power supplying apparatus 10 can supply power to the power receiving apparatus 50. Therefore, it is effectively avoided that the magnetic energy might be accidentally emitted, damaging the remaining circuit components or separate devices. Position detector for the power receiving apparatus 50 may be achieved not only by the above-mentioned combination of magnets 62/reed switches 22, but also by a combination of magnet/Hall element, a photocoupler, a mechanical microswitch, or an arrangement such that a bottom surface of the power receiving apparatus 50 is partially made reflective while the power supplying apparatus 10 is provided with light emitting element and light receiving element.

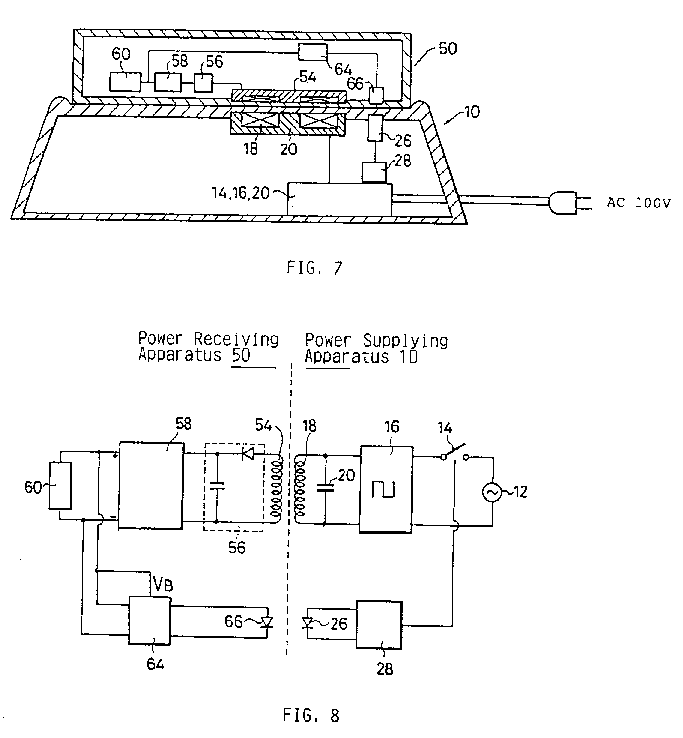

Figs. 7 and 8 illustrate a modified embodiment of the present invention, which is so constructed that the output voltage of a chargeable battery provided in the power receiving apparatus 50 is monitored and it is signaled to the power supplying apparatus 10 whether the battery need to be charged or not. Fig. 7 illustrates this embodiment in a vertical section similarly to Fig. 1 and Fig. 8 illustrates a circuit arrangement thereof. It should be understood that the similar components or elements to those in Figs. 1 and 2 are designated by the similar reference numerals.

Reference numerals 64 designates a monitoring circuit to monitor the output voltage of the chargeable battery 58. Power consumption by this monitoring circuit 64 is very small and therefore a bias voltage necessary for this monitoring circuit 64 can be taken out from the output voltage of the chargeable battery 58. When the output voltage of the battery 58 becomes lower than a predetermined value, the monitoring circuit 64 activates a light emitting diode 66. The light emitting diode 66 is located, like the magnet 62 in the embodiment of Fig. 1, on the surface of the power receiving apparatus 50 facing the top of the power supplying apparatus 10 and, in opposition thereto, the power supplying apparatus 10 is provided with a light receiving element 26. The light emitting diode 66 and the light receiving element 26 together form so-called photocoupler. So long as the light receiving element 26 receives the light from the light emitting diode 66, a switch control circuit 28 continues to supply the switch 14 with switch closing signal with which said switch 14 is closed.

According to the embodiment as shown by Fig. 7, proper placement of the power receiving apparatus 50 on the top of the power supplying apparatus 10 necessarily results in alignment of the light emitting diode 66 with the corresponding light receiving element 26. If the output DC voltage of the chargeable battery 58 is lower than a predetermined value, the monitoring circuit 64 will activate the light emitting diode 66 and, with a consequence, a power supply signal will be applied to the power supplying apparatus 10. When the light receiving element 26 receives the light from the light emitting diode 66, the switch control circuit 28 applies the switch closing signal to the switch 14. As a result, the frequency converter 16 is activated and, thus, power supply to the chargeable battery 58 occurs through the coils 18, 54.

When the chargeable battery 58 has been charged to a predetermined voltage as the power receiving apparatus 50 is supplied with power, the monitoring circuit 64 deenergizes the light emitting diode 66. In consequence, the switch control circuit 28 applies switch opening signal to the switch 14 so as to stop the power supply.

The output DC voltage level of the chargeable battery 58 requiring no more power supply is generally higher than the output DC voltage level of the chargeable battery 58 requiring further power supply. For this reason, it is preferred that the monitoring circuit 64 has substantially two thresholds. More specifically, this is achieved by applying the output voltage of the chargeable battery 58 to a comparator for comparison with a single threshold via RC integrating circuit having a long time constant (or analog delay line).

With the embodiment of Fig. 7, useless charging is avoided because power supply occurs only when charging is necessary. It will be appreciated that, in addition to the power supply signal transmitting system comprising light emitting diode 66 and light receiving element 26, the power receiving apparatus position detecting means 22, 22; 62, 62 may also be employed together with said signal transmitting system. In such a case, the switch control circuit 28 will serve also as the switch control circuit 24, i.e., apply the switch closing signal to the switch 14 when the power receiving apparatus 50 has been properly placed and charging is necessary.

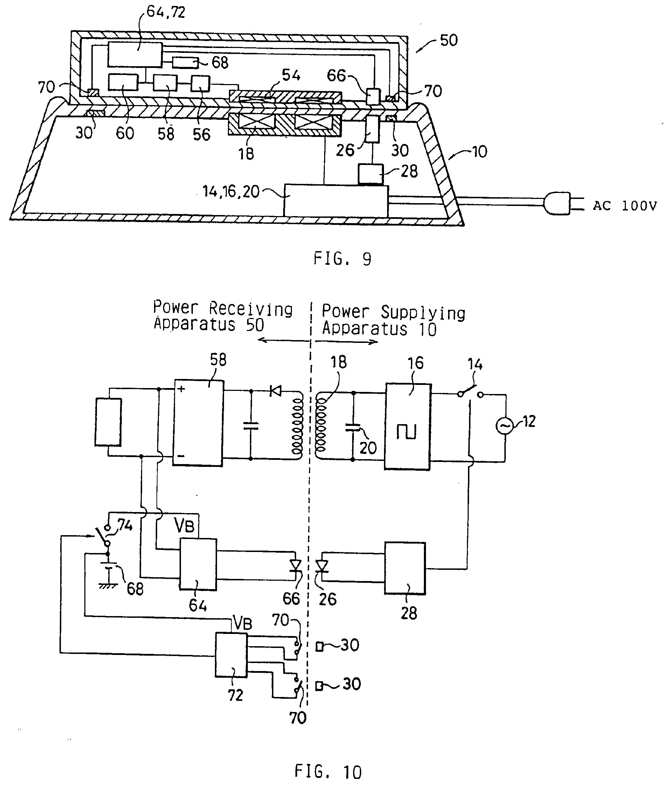

Figs. 9 and 10 illustrate a variation of the embodiment shown by Fig. 7, in which there is provided a backup source 68 exclusively for power supply to the monitoring circuit 64 so that the power supply signal can be applied to the power supplying apparatus 10 even after the chargeable battery 58 has been significantly consumed. The power receiving apparatus 50 is provided with means 70, 70; 72 to detect when the power receiving apparatus 50 has been properly placed on top of the power supplying apparatus 10, and in response to detection signal of these means, the voltage supplied from the backup source 68 is applied to the monitoring circuit 64 so as to activate said monitoring circuit 64.

More particularly, this embodiment has an arrangement which is inverse to the embodiment of Fig. 1 in that the surface of the power supplying apparatus 10 facing the power receiving apparatus 50 is provided at single or plural locations with magnets 30, 30 while the power receiving apparatus 50 is provided on its lower surface with reed switches 70, 70 which are responsive to the corresponding magnets 30, 30 to be closed. A logic circuit 72 generates, upon closure of all the reed switches 70, 70, closing signal for a switch 74. If the logic circuit 72 is constructed as an electronic circuit, a desired power will be taken from the backup source 68. Said switch 74 may be replaced by serially connected reed switches 70. In this case, both the logic circuit 72 and the switch 74 itself are unnecessary. The most important problem is a current capacity and so the circuit arrangement essential for the function of this embodiment is not limited to that as illustrated.

Although it is not illustrated in detail, the backup source 68 is charged with the DC voltage supplied from the smoothing circuit 26 as occasion demands.

With the embodiment as shown by Fig. 9, upon the proper placement of the power receiving apparatus 50 on the top of the power supplying apparatus 10, the reed switches 70, 70 on the power receiving apparatus 50 are necessarily brought into alignment with the corresponding magnets 30, 30 on the power supplying apparatus 10 and thereby closed. So long as all the reed switches 70, 70 are closed, the logic circuit 72 generates the closing signal with which the switch 74 is closed. The monitoring circuit 64 is thereby activated to monitor the output DC voltage of the chargeable battery 58 and, if said output DC voltage is lower than a predetermined value, activates the light emitting diode 66. When the light receiving element 26 receives the light from the light emitting diode 66, the switch control circuit 28 applies the closing signal to the switch 14. In consequence, the power receiving apparatus 50 is supplied with power.

When the chargeable battery 58 has been charged to a predetermined voltage as the power receiving apparatus 50 is supplied with power, the monitoring circuit 64 deenergizes the light emitting diode 66 and thereby the switch control circuit 28 applied the opening signal to the switch 14, stopping power supply.

With the embodiment of Fig. 7, the light emitting diode 66 continues to emit the light so far as the output voltage level of the chargeable battery 50 is lower than a predetermined value. This feature is preferable in view of an effective warning to the user but leads to a power consumption. With the embodiment of Fig. 9, on the other hand, the monitoring circuit 64 is activated upon the proper placement of the power receiving apparatus 50 on the power supplying apparatus 10 and therefore any useless activation of the light emitting diode 66 is avoided with a result of the minimum power consumption.

Again with the embodiment of Fig. 7, after complete consumption of the chargeable battery 58, the monitoring circuit 64 can not be activated and accordingly no more power supply occurs. As a countermeasure to this problem, there may be provided the backup source 68 as has been described in reference with Fig. 9. Alternatively, there may be provided an arrangement such that, when the power source of the power supplying apparatus 10 is connected (or when a power supply initiating switch, though not shown, is closed), the switch 14 is maintained closed at least for a short period until the DC voltage level at which the monitoring circuit 64 can be activated is reached and thereby the power receiving apparatus 50 is supplied with power permitting the monitoring circuit 64 to be normally activated.

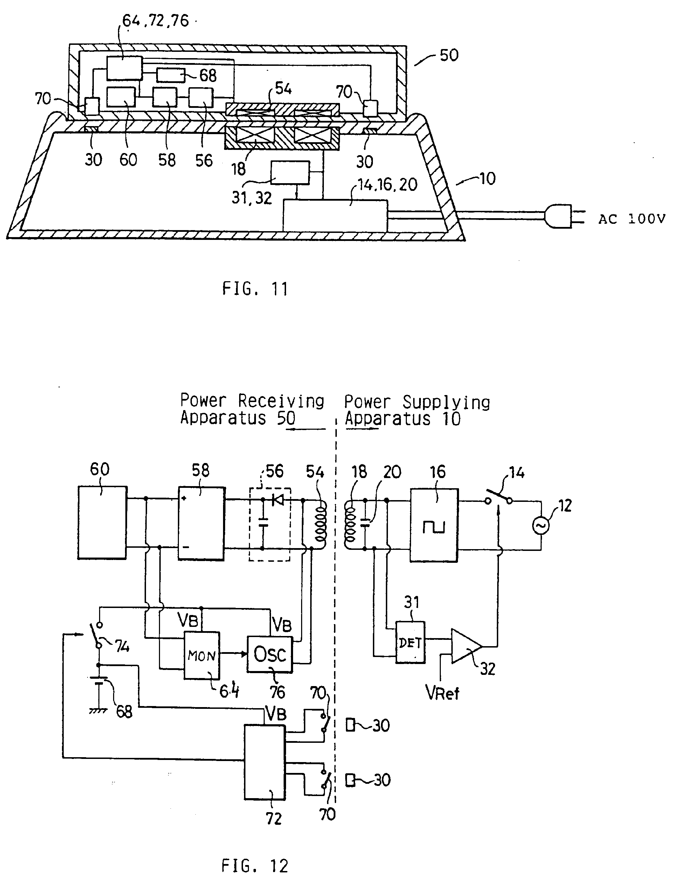

Figs. 11 and 12 illustrate a variation of the embodiment shown by Fig. 9, in which the power supply signal transmitting system, i.e., the combination of light emitting diode 66/light receiving element 26 adopted in the embodiment of Fig. 9 is replaced by a combination of power supplying coil 18/power receiving coil 54. It should be understood that the similar components or elements similar to those in Fig. 9 are designated by the similar reference numerals. Reference numeral 76 designates an oscillation circuit which is responsive to the power supply signal applied from the monitoring circuit 64 to output an AC signal of a predetermined frequency and this output is applied to the power receiving coil 54. The oscillation frequency of the oscillation circuit 76 may be so selected to be transmitted to the power supplying apparatus 10 with a desired intensity even when the coils 18, 54 constitute a transformer of open magnetic path type. In the power supplying apparatus, reference numeral 31 designates a detector to detect the AC signal of the power supplying coil 18 and 32 designates a comparator to compare the output voltage of said detector 31 with a predetermined reference voltage V_{ref}. If the output voltage of the detector 31 is lower than said reference voltage V_{ref}, the comparator 32 will apply the closing signal to the switch 14.

With the embodiment of Figs. 11 and 12, upon the proper placement of the power receiving apparatus 50 on the top of the power supplying apparatus 10, all the reed switches 70, 70 are responsive to the magnets 30, 30 to be closed and the output of the logic circuit 72 causes the switch 74 to be closed. Upon closure of the switch 74, the monitoring circuit 64 is activated and will supply the power supply signal to the oscillation circuit 76 is the output DC voltage of the chargeable battery 58 is lower than a predetermined threshold. The oscillation circuit 76 is responsive to this power supply signal to apply the AC signal of a predetermined frequency to the power supplying apparatus 10 through the magnetic coupling of the power receiving coil 54 and the power supplying coil 18. The detector 31 detects the AC signal of a predetermined frequency coming from the power receiving apparatus 50 and when the output of the detector 31 is higher than a predetermined reference value the comparator 32 applies the closing signal to the switch 14. Upon closure of the switch 14, the frequency converter 16 is activated and thus power supply to the power receiving apparatus 50 occurs.

When the chargeable battery 58 has been adequately charged and the output DC voltage thereof exceeds predetermined threshold, the monitoring circuit 64 ceases to generate the power supply signal and the oscillation circuit 76 provides no further output.

The detector 31 may be a circuit adapted to detect only the signal having the oscillation frequency of the oscillation circuit 76 or may be a circuit adapted to detect the signal having the alternating frequency output from the frequency converter 16 also. In case of the former, upon completion of the charging, the switch 14 is opened and power supply is stopped. In case of the latter, even after the oscillation circuit 76 has been deactivated upon completion of the charging, the detector 31 continues to detect the output of the frequency converter 16 and maintains the switch 14 closed.

Although the magnetic coupling type has been described as the non-contacting power supplying system, the present invention is not intended to be limited to such magnetic coupling type. For example, a photocoupling type is also covered by the present invention, in which the power supplying apparatus 10 is provided with a light emitting element while the power receiving apparatus is provided with a solar cell.

Concerning the power supply signal transmitting system consisting of the light emitting diode 66 and the light receiving element 26 as illustrated in Figs. 8 and 10, it is preferred to interpose an infrared transmitting filter and/or to flash the light emitting diode 66 and thereby to exclude any influence of external light.

## Claims

1. A non-contacting power supplying and receiving system comprising:
a power supplying apparatus (10) including a power supplying coil (18), a frequency converter (16) for supplying a signal at a predetermined frequency, a switch (14) responsive to an applied switching signal for interconnecting said frequency converter (16) with said power supplying coil (18) to provide said signal at said predetermined frequency to said power supplying coil (18) when said switching signal is supplied to said switch (14), said power supplying apparatus (10) further including switch control means (24) responsive to a position detection signal for supplying said switching signal to said switch (14);
a portable power receiving apparatus (50) including a power receiving coil (54), said portable power receiving apparatus (50) being positionable in a predetermined spatial relationship with said power supplying apparatus (10) to electromagnetically couple said power receiving coil (54) of said power receiving apparatus (50) with the power supplying coil (18) of said power supplying apparatus (10); and
position detection means (62, 22) for supplying said position detection signal to said switch control means (24) of said power supplying apparatus (10) when said portable power receiving apparatus (50) is in said predetermined spatial orientation with said power supplying apparatus (10);
**characterized** by a capacitor (20) connected in parallel with said power supplying coil (18) to establish resonance at a resonant frequency that is at least 1.5 times greater than said predetermined frequency.

2. The system of claim 1 wherein said position detection means includes one or more magnets (62) mounted in said portable power receiving apparatus (50) and one or more magnetically operated switches (22) mounted in said power supplying apparatus (10) with each said magnet (62) being mounted for operation of a corresponding one of said magnetically operated switches (22) when said portable power receiving apparatus (50) is in said predetermined spatial orientation with said power supplying apparatus (10), said one or more magnetically operated switches (22) supplying said position detection signal to said logic means (24) when said portable power receiving apparatus (50) is in said predetermined spatial orientation with said power supplying apparatus (10).

3. A non-contacting power supplying and receiving system comprising:
a power supplying apparatus (10) including a power supplying coil (18), a frequency converter (16) for supplying a signal at a predetermined frequency, a switch (14) responsive to an applied switching signal for interconnecting said frequency converter (16) with said power supplying coil (18) to provide said signal at said predetermined frequency to said power supplying coil (18) when said switching signal is supplied to said switch (14), said power supplying apparatus (10) further including switch control means (28) for supplying said switching signal to said switch (14); and
a portable power receiving apparatus (50) including a power receiving coil (54), said portable power receiving apparatus (50) being positionable in a predetermined spatial relationship with said power supplying apparatus (10) to electromagnetically couple said power receiving coil (54) of said power receiving apparatus (50) with the power supplying coil (18) of said power supplying apparatus (10);
**characterized** by a capacitor (20) connected in parallel with said power supplying coil (18) to establish resonance at a resonant frequency that is at least 1.5 times greater than said predetermined frequency, wherein said portable power receiving apparatus (50) includes a rechargeable source (58) of electrical power and charge level detector means (64) connected to said rechargeable source (58) of electrical power for supplying a status signal that indicates that said recharcheable source (58) of electrical power is in need of recharging, said power receiving apparatus (50) further including a smoothing circuit (56) connected to said power receiving coil (54) for supplying a charging signal to said rechargeable source (58) of electrical power, the system further including a photocoupler (66, 26) adapted to feed said signal representative of said status of said rechargeable source (58) of electrical power to said switch control means (28) of said power supplying apparatus (10) to interconnect said power supplying coil (18) with said frequency converter (16) when said power receiving apparatus (50) is in said predetermined spatial orientation with said portable power supplying apparatus (10) and said status signal indicates that said rechargeable source (58) of electrical power is in need of recharging.

4. The system according to claim 3 wherein said photocoupler includes a light emitting diode (66) mounted in said portable power receiving apparatus (50) and a light receiving element (26) mounted in said power supplying apparatus (10) with said light emitting diode (66) being mounted to supply light to said light receiving element (26) when said portable power receiving apparatus (50) is in said predetermined spatial orientation with said power supplying apparatus (10), said light receiving element (26) supplying its signal to said switch control means (28) when said portable power receiving apparatus (50) is in said predetermined spatial orientation with said power supplying apparatus (10).

5. A non-contacting power supplying and receiving system comprising:
a power supplying apparatus (10) including a power supplying coil (18), a frequency converter (16) for supplying a signal at a predetermined frequency, a switch (14) responsive to an applied switching signal for interconnecting said frequency converter (16) with said power supplying coil (18) to provide said signal at said predetermined frequency to said power supplying coil (18) when said switching signal is supplied to said switch (14), said power supplying apparatus (10) further including switch control means (28) for supplying said switching signal to said switch (14);
a portable power receiving apparatus (50) including a power receiving coil, said portable power receiving apparatus (50) being positionable in a predetermined spatial relationship with said power supplying apparatus (10) to electromagnetically couple said power receiving coil of said power receiving apparatus (50) with the power supplying coil (18) of said power supplying apparatus (10); and
position detection means (30, 70) for supplying a position detection signal
**characterized** by a capacitor (20) connected in parallel with said power supplying coil (18) to establish resonance at a resonant frequency that is at least 1.5 times greater than said predetermined frequency, wherein said portable power receiving apparatus (50) further includes a backup battery (68) for supplying operating power to a charge level detector means (64) and also includes a switch (74) operable dependent on said position detection signal and connecting said backup battery (68) to said charge level detector means (64) only when said portable power receiving apparatus (50) is in said predetermined spatial orientation.

6. The system according to claim 5 wherein said switch (74) includes an electrically-operable switch (74) interposed between said backup battery (68) and said charge level detector means (64), the system further including logic means (72) connected for operating said electrically-operable switch (74), said logic means (72) being responsive to said position detection signal.

7. The system of claims 5 or 6 wherein a photocoupler (66, 26) includes a light emitting diode (66) mounted in said portable power receiving apparatus (50) and a light receiving element (26) mounted in said power supplying apparatus (10) with said light emitting diode (66) being energized by a status signal from said charge level detector means (64) and being mounted to supply light to said light receiving element (26) when said portable power receiving apparatus (50) is in said predetermined spatial orientation with said power supplying apparatus (10), said light receiving element (26) supplying its signal to said switch control means (28) when said rechargeable source (58) of electrical power is in need of charging.

8. A non-contacting power supplying and receiving system comprising:
a power supplying apparatus (10) including a power supplying coil (18), a frequency converter (16) for supplying a signal at a predetermined frequency, a switch (14) responsive to an applied switching signal for interconnecting said frequency converter (16) with said power supplying coil (18) to provide said signal at said predetermined frequency to said power supplying coil (18) when said switching signal is supplied to said switch (14), said power supplying apparatus (10) further including switch control means (31, 32) for supplying said switching signal to said switch (14); and
a portable power receiving apparatus (50) including a power receiving coil (54), said portable power receiving apparatus (50) being positionable in a predetermined spatial relationship with said power supplying apparatus (10) to electromagnetically couple said power receiving coil (54) of said power receiving apparatus (50) with the power supplying coil (18) of said power supplying apparatus (10);
**characterized** by a capacitor (20) connected in parallel with said power supplying coil (18) to establish resonance at a resonant frequency that is at least 1.5 times greater than said predetermined frequency, wherein said power receiving apparatus (50) includes a rechargeable source (58) of electrical power and charge level detector means (64) connected to said rechargeable source (58) of electrical power for supplying a status signal that indicates that said rechargeable source (58) of electrical power is in need of recharging, an oscillator (76) activated by said status signal and connected for supplying a signal to said power receiving coil (54), and wherein said power supplying apparatus (10) includes a signal detector (31) connected to said power supplying coil (18) for detection of said signal supplied by said oscillator (76) to said power receiving coil (54), said signal detector (31) supplying said switching signal to said switch (14) to interconnect said frequency converter (16) with said power supplying coil (18) when said oscillator (76) provides said signal to said power receiving coil (54).

9. The system of any one of claims 1 to 8 wherein said resonant frequency is on the order of at least two times said predetermined frequency.

## Patentansprüche

1. Kontaktlose Energiezufuhr und -empfangsvorrichtung umfassend:
eine Energiezufuhrvorrichtung (10) mit einer Energiezufuhrspule (18), einem Frequenzwandler (16) zum Übertragen eines Signals mit einer vorbestimmten Frequenz, einem Schalter (14), der auf ein angelegtes Schaltsignal reagiert, zum Verbinden des Frequenzwandlers (16) mit der Energiezufuhrspule (18), um das Signal mit der vorbestimmten Frequenz der Energiezufuhrspule (18) zuzuführen, wenn das Schaltsignal dem Schalter (14) zugeführt wird, ferner mit einer Schaltersteuervorrichtung (24), die auf ein Positionserfassungssignal reagiert, um das Schaltsignal dem Schalter (14) zuzuführen;
eine tragbare Energieempfangsvorrichtung (50) mit einer Energieempfangsspule (54), wobei die tragbare Energieempfangsvorrichtung (50) in vorbestimmter räumlicher Beziehung mit der Energiezufuhrvorrichtung (10) zur elektromagnetischen Kopplung der Energieempfangsspule (54) der Energieempfangsvorrichtung (50) mit der Energiezufuhrspule (18) der Energiezufuhrvorrichtung (10) angeordnet werden kann; und
eine Positionserfassungsvorrichtung (62, 22) zum Übertragen des Positionserfassungssignals zur Schaltersteuervorrichtung (24) der Energiezufuhrvorrichtung (10), wenn sich die tragbare Energieempfangsvorrichtung (50) in der vorbestimmten räumlichen Orientierung mit der Energiezufuhrvorrichtung (10) befindet;
dadurch **gekennzeichnet**, daß ein Kondensator (20) der Energiezufuhrspule (18) zur Erzeugung einer Resonanz parallel geschaltet ist, deren Resonanzfrequenz mindestens 1.5 mal größer als die vorbestimmte Frequenz ist.

2. Vorrichtung nach Anspruch 1, dadurch **gekennzeichnet**, daß die Positionserfassungsvorrichtung einen oder mehrere in der tragbaren Energieempfangsvorrichtung (50) befestigte Magnete (62), und einen oder mehrere in der Energiezufuhrvorrichtung (10) magnetisch betätigbare Schalter (22) umfaßt, wobei jeder Magnet (62) zum Bedienen eines entsprechenden magnetisch betätigbaren Schalters (22) angeordnet ist, wenn sich die tragbare Energieempfangsvorrichtung (50) in der vorbestimmten räumlichen Orientierung mit der Energiezufuhrvorrichtung (10) befindet, wobei einer oder mehrere magnetisch bedienbare Schalter (22) das Positionserfassungssignal zur logischen Schaltung (24) übertragen, wenn sich die tragbare Energieempfangsvorrichtung (50) in der vorbestimmten räumlichen Orientierung mit der Energiezufuhrvorrichtung (10) befindet.

3. Kontaktlose Energiezufuhr und -empfangsvorrichtung umfassend:
eine Energiezufuhrvorrichtung (10) mit einer Energiezufuhrspule (18), einem Frequenzwandler (16) zum Übertragen eines Signals mit einer vorbestimmten Frequenz, einem Schalter (14), der auf ein angelegtes Schaltsignal reagiert, zum Verbinden des Frequenzwandlers (16) mit der Energiezufuhrspule (18), um das Signal mit der vorbestimmten Frequenz der Energiezufuhrspule (18) zuzuführen, wenn das Schaltsignal dem Schalter (14) zugeführt wird, ferner mit einer Schaltersteuervorrichtung (28), die das Schaltsignal dem Schalter (14) zuführt; und eine tragbare Energieempfangsvorrichtung (50) mit einer Energieempfangsspule (54), wobei die tragbare Energieempfangsvorrichtung (50) in vorbestimmter räumlicher Beziehung mit der Energiezufuhrvorrichtung (10) zur elektromagnetischen Kopplung der Energieempfangsspule (54) der Energieempfangsvorrichtung (50) mit der Energiezufuhrspule (18) der Energiezufuhrvorrichtung (10) angeordnet werden kann;
dadurch **gekennzeichnet**, daß ein Kondensator (20) der Energiezufuhrspule (18) zur Erzeugung einer Resonanz parallel geschaltet ist, deren Resonanzfrequenz mindestens 1.5 mal größer als die vorbestimmte Frequenz ist, daß die tragbare Energieempfangsvorrichtung (50) eine wiederaufladbare elektrische Stromquelle (58) und eine Ladepegeldetektorvorrichtung (64) enthält, die mit der wiederaufladbaren elektrischen Stromquelle (58) verbunden ist, um ein Statussignal zu übertragen, das anzeigt, daß die wiederaufladbare elektrische Stromquelle (58) aufgeladen werden muß, daß die Energieempfangsvorrichtung (50) ferner eine mit der Energieempfangsspule (54) verbundene Glättungsschaltung (56) zur Übertragung eines Ladesignals zur wiederaufladbaren elektrischen Stromquelle (58) hat, daß diese Vorrichtung ferner einen Photokoppler (66, 26) enthält, der das den Status der wiederaufladbaren elektrischen Stromquelle (58) darstellende Signal zur Schaltersteuervorrichtung (28) der Energiezufuhrvorrichtung (10) überträgt, um die Energiezufuhrspule (18) mit dem Frequenzwandler (16) zu verbinden, wenn sich die Energieempfangsvorrichtung (50) in der vorbestimmten räumlichen Orientierung mit der tragbaren Energiezufuhrvorrichtung (10) befindet und das Statussignal anzeigt, daß die wiederaufladbare elektrische Stromquelle (58) aufgeladen werden muß.

4. Vorrichtung nach Anspruch 3, dadurch **gekennzeichnet**, daß der Photokoppler eine in der tragbaren Energieempfangsvorrichtung (50) befestigte Leuchtdiode (66) und ein in der Energiezufuhrvorrichtung (10) angeordnetes Lichtempfangselement (26) enthält, wobei die Leuchtdiode (66) so angeordnet ist, daß sie dem Lichtempfangselement (26) Licht zuführt, wenn sich die tragbare Lichtempfangsvorrichtung (50) in der vorbestimmten räumlichen Orientierung mit der Energiezufuhrvorrichtung (10) befindet, und daß das Lichtempfangselement (26) sein Signal der Schaltersteuervorrichtung (28) zuführt, wenn sich die tragbare Energieempfangsvorrichtung (50) in der vorbestimmten räumlichen Orientierung mit der Energiezufuhrvorrichtung (10) befindet.

5. Kontaktlose Energiezufuhr und -empfangsvorrichtung umfassend:
eine Energiezufuhrvorrichtung (10) mit einer Energiezufuhrspule (18), einem Frequenzwandler (16) zum Übertragen eines Signals mit einer vorbestimmten Frequenz, einem Schalter (14), der auf ein angelegtes Schaltsignal reagiert, zum Verbinden des Frequenzwandlers (16) mit der Energiezufuhrspule (18), um das Signal mit der vorbestimmten Frequenz der Energiezufuhrspule (18) zuzuführen, wenn das Schaltsignal dem Schalter (14) zugeführt wird, ferner mit einer Schaltersteuervorrichtung (24), die das Schaltsignal dem Schalter (14) zuführt;
eine tragbare Energieempfangsvorrichtung (50) mit einer Energieempfangsspule (54), wobei die tragbare Energieempfangsvorrichtung (50) in vorbestimmter räumlicher Beziehung mit der Energiezufuhrvorrichtung (10) zur elektromagnetischen Kopplung der Energieempfangsspule (54) der Energieempfangsvorrichtung (50) mit der Energiezufuhrspule (18) der Energiezufuhrvorrichtung (10) angeordnet werden kann; und
eine Positionserfassungsvorrichtung (30, 70) zum Zuführen eines Positionserfassungssignals,
dadurch **gekennzeichnet**, daß ein Kondensator (20) der Energiezufuhrspule (18) zur Erzeugung einer Resonanz parallel geschaltet ist, deren Resonanzfrequenz mindestens 1.5 mal größer als die vorbestimmte Frequenz ist, daß die tragbare Energieempfangsvorrichtung (50) ferner eine Reservebatterie (68) zur Zufuhr eines Betriebsstroms zur Ladepegelerfassungsvorrichtung (64) hat, sowie einen Schalter (74), der abhängig vom Positionserfassungssignal betätigbar ist und die Reservebatterie (68) mit der Ladepegelerfassungsvorrichtung (64) nur verbindet, wenn sich die tragbare Energieempfangsvorrichtung (50) in der vorbestimmten räumlichen Orientierung befindet.

6. Vorrichtung nach Anspruch 5, dadurch **gekennzeichnet**, daß der Schalter (74) ein zwischen der Reservebatterie (68) und der Ladepegelerfassungsvorrichtung (64) angeordneter elektrisch betätigbarer Schalter ist, daß die Vorrichtung ferner eine logische Schaltung (72) zur Betätigung des elektrisch betätigbaren Schalters (74) hat, und daß die logische Schaltung (72) auf das Positionserfassungssignal reagiert.

7. Vorrichtung nach Anspruch 5 oder 6, dadurch **gekennzeichnet**, daß ein Photokoppler (66, 26) eine in der tragbaren Energieempfangsvorrichtung (50) befestigte Leuchtdiode (66) und ein in der Energiezufuhrvorrichtung (10) befestigtes Lichtempfangselement (26) enthält, daß die Leuchtdiode (66) durch ein Statussignal der Ladepegelerfassungsvorrichtung (64) gespeist wird und angeordnet ist, um dem Lichtempfangselement (26) Licht zuzuführen, wenn sich die tragbare Energieempfangsvorrichtung (50) in der vorbestimmten räumlichen Orientierung zur Energiezufuhrvorrichtung (10) befindet, und daß das Lichtempfangselement (26) sein Signal der Schaltersteuervorrichtung (28) zuführt, wenn die wiederaufladbare elektrische Stromquelle (58) aufgeladen werden muß.

8. Kontaktlose Energiezufuhr und -empfangsvorrichtung umfassend:
eine Energiezufuhrvorrichtung (10) mit einer Energiezufuhrspule (18), einem Frequenzwandler (16) zum Übertragen eines Signals mit einer vorbestimmten Frequenz, einem Schalter (14), der auf ein angelegtes Schaltsignal reagiert, zum Verbinden des Frequenzwandlers (16) mit der Energiezufuhrspule (18), um das Signal mit der vorbestimmten Frequenz der Energiezufuhrspule (18) zuzuführen, wenn das Schaltsignal dem Schalter (14) zugeführt wird, ferner mit einer Schaltersteuervorrichtung (31, 32), die das Schaltsignal dem Schalter (14) zuführt; und
eine tragbare Energieempfangsvorrichtung (50) mit einer Energieempfangsspule (54), wobei die tragbare Energieempfangsvorrichtung (50) in vorbestimmter räumlicher Beziehung mit der Energiezufuhrvorrichtung (10) zur elektromagnetischen Kopplung der Energieempfangsspule (54) der Energieempfangsvorrichtung (50) mit der Energiezufuhrspule (18) der Energiezufuhrvorrichtung (10) angeordnet werden kann;
dadurch **gekennzeichnet**, daß ein Kondensator (20) der Energiezufuhrspule (18) zur Erzeugung einer Resonanz parallel geschaltet ist, deren Resonanzfrequenz mindestens 1.5 mal größer als die vorbestimmte Frequenz ist, daß die Energieempfangsvorrichtung (50) eine wiederaufladbare elektrische Stromquelle (58) und eine Ladepegeldetektorvorrichtung (64) enthält, die mit der wiederaufladbaren elektrischen Stromquelle (58) verbunden ist, um ein Statussignal zu übertragen, das anzeigt, daß die wiederaufladbare elektrische Stromquelle (58) aufgeladen werden muß, daß ein durch das Statussignal aktivierter Oszillator (76) der Energieempfangsspule (54) ein Signal zuführt, und daß die Energiezufuhrvorrichtung (10) einen mit der Energiezufuhrspule (18) verbundenen Signaldetektor (31) zur Erfassung des der Energieempfangsspule (54) vom Oszillator (76) zugeführten Signals enthält und daß der Signaldetektor (31) das Schaltsignal dem Schalter (14) zuführt, um den Frequenzwandler (16) mit der Energiezufuhrspule (18) zu verbinden, wenn der Oszillator (76) der Energieempfangsspule (54) das Signal überträgt.

9. Vorrichtung nach einem der Ansprüche 1 bis 8, dadurch ge**kennzeichnet**, daß die Resonanzfrequenz in der Größenordnung mindestens der zweifachen vorbestimmten Frequenz liegt.

## Revendications

1. Système d'alimentation et de réception d'énergie sans contact comprenant :
un dispositif d'alimentation en énergie (10) comprenant une bobine d'alimentation en énergie (18), un convertisseur de fréquence (16) pour fournir un signal à une fréquence prédéterminée, un commutateur (14) répondant à l'application d'un signal de commutation pour connecter ensemble ledit convertisseur de fréquence (16) et ladite bobine d'alimentation en énergie (18) pour fournir un signal à ladite fréquence prédéterminée à ladite bobine d'alimentation en énergie (18) lorsque ledit signal de commutation est fourni audit commutateur (14), ledit dispositif d'alimentation en énergie (10) comprenant en outre des moyens de commande de commutation (24) répondant à un signal de détection d'état pour fournir ledit signal de commutation audit commutateur (14);
un dispositif portable de réception d'énergie (50) comprenant une bobine de réception d'énergie (54), ledit dispositif portable de réception d'énergie (50) pouvant être positionné de façon prédéterminée dans l'espace par rapport audit dispositif d'alimentation en énergie (10) pour coupler électro-magnétiquement ladite bobine de réception d'énergie (54) dudit dispositif de réception d'énergie (50) et la bobine d'alimentation en énergie (18) dudit dispositif d'alimentation en énergie (10); et
des moyens de détection d'état (62, 22) pour fournir ledit signal de détection d'état auxdits moyens de commande de commutation (24) dudit dispositif d'énergie (10) lorsque ledit dispositif portable de réception d'énergie (50) est orienté dans l'espace de ladite façon prédéterminée par rapport audit dispositif d'alimentation en énergie (10);
caractérisé par un condensateur (20) relié en parallèle à ladite bobine d'alimentation en énergie (18) pour établir une résonance à une fréquence de résonance qui est au moins une fois et demi supérieure à ladite fréquence prédéterminée.

2. Système selon la revendication 1, dans lequel lesdits moyens de détection d'état comprennent un ou plusieurs aimants (62) montés dans ledit dispositif portable de réception d'énergie (50), et un ou plusieurs commutateurs (22) commandés magnétiquement montés dans ledit dispositif d'alimentation en énergie (10), chacun desdits aimants (62) étant monté pour fonctionner en correspondance avec l'un desdits commutateurs (22) commandés magnétiquement lorsque ledit dispositif portable de réception d'énergie (50) est orienté dans l'espace de ladite façon prédéterminée par rapport audit dispositif d'alimentation en énergie (10), ledit ou lesdits commutateurs (22) commandés magnétiquement fournissant ledit signal de détection d'état auxdits moyens logiques (24) lorsque ledit dispositif portable de réception d'énergie (50) est orienté dans l'espace de ladite façon prédéterminée par rapport audit dispositif d'alimentation en énergie (10).

3. Système d'alimentation et de réception d'énergie sans contact comprenant :
un dispositif d'alimentation en énergie (10) comprenant une bobine d'alimentation en énergie (18), un convertisseur de fréquence (16) pour fournir un signal à une fréquence prédéterminée, un commutateur (14) répondant à l'application d'un signal de commutation pour connecter ensemble ledit convertisseur de fréquence (16) et ladite bobine d'alimentation en énergie (18) pour fournir un signal à ladite fréquence prédéterminée à ladite bobine d'alimentation en énergie (18) lorsque ledit signal de commutation est fourni audit commutateur (14), ledit dispositif d'alimentation en énergie (10) comprenant en outre des moyens de commande de commutation (28) répondant à un signal de détection d'état pour fournir ledit signal de commutation audit commutateur (14); et
un dispositif portable de réception d'énergie (50) comprenant une bobine de réception d'énergie (54), ledit dispositif portable de réception d'énergie (50) pouvant être positionné de façon prédéterminée dans l'espace par rapport audit dispositif d'alimentation en énergie (10) pour coupler électro-magnétiquement ladite bobine de réception d'énergie (54) dudit dispositif de réception d'énergie (50) et la bobine d'alimentation en énergie (18) dudit dispositif d'alimentation en énergie (10);
caractérisé par un condensateur (20) relié en parallèle à ladite bobine d'alimentation en énergie (18) pour établir une résonance à une fréquence de résonance qui est au moins une fois et demi supérieure à ladite fréquence prédéterminée, et dans lequel ledit dispositif portable de réception d'énergie (50) comprend une source rechargeable (58) en énergie électrique et des moyens de détection de niveau de charge (64) reliés à ladite source rechargeable (58) en énergie électrique pour fournir un signal d'état indiquant que ladite source rechargeable (58) en énergie électrique a besoin d'être rechargée, ledit dispositif de réception d'énergie (50) comprenant en outre un circuit de lissage (56) relié à ladite bobine de réception d'énergie (54) pour fournir un signal de charge à ladite source rechargeable (58) en énergie électrique, le système comprenant en outre un photocoupleur (66, 26) adapté pour amener ledit signal représentatif dudit état de ladite source rechargeable (58) en énergie électrique auxdits moyens de commande de commutation (28) dudit dispositif d'alimentation en énergie (10) pour interconnecter ladite bobine d'alimentation en énergie (18) et ledit convertisseur de fréquence (16) lorsque ledit dispositif de réception d'énergie (50) est orienté dans l'espace de façon prédéterminée par rapport audit dispositif portable d'alimentation en énergie (10) et que ledit signal d'état indique que ladite source rechargeable (58) en énergie électrique a besoin d'être rechargée.

4. Système selon la revendication 3, dans lequel ledit photocoupleur comprend une diode électroluminescente (66) montée dans ledit dispositif portable de réception d'énergie (50) et un élément récepteur de luminosité (26) monté dans ledit dispositif d'alimentation en énergie (10), ladite diode électroluminescente (66) étant montée pour fournir de la lumière audit élément récepteur de luminosité (26) lorsque ledit dispositif portable de réception d'énergie (50) est dans ladite orientation prédéterminée dans l'espace par rapport audit dispositif d'alimentation en énergie (10), ledit élément récepteur de luminosité (26) fournissant son signal auxdits moyens de commande de commutation (28) lorsque ledit dispositif portable de réception d'énergie (50) est orienté dans l'espace de ladite façon prédéterminée par rapport audit dispositif d'alimentation en énergie (10).

5. Système d'alimentation et de réception d'énergie sans contact comprenant :
un dispositif d'alimentation en énergie (10) comprenant une bobine d'alimentation en énergie (18), un convertisseur de fréquence (16) pour fournir un signal à une fréquence prédéterminée, un commutateur (14) répondant à l'application d'un signal de commutation pour connecter ensemble ledit convertisseur de fréquence (16) et ladite bobine d'alimentation en énergie (18) pour fournir un signal à ladite fréquence prédéterminée à ladite bobine d'alimentation en énergie (18) lorsque ledit signal de commutation est fourni audit commutateur (14), ledit dispositif d'alimentation en énergie (10) comprenant en outre des moyens de commande de commutation (28) répondant à un signal de détection d'état pour fournir ledit signal de commutation audit commutateur (14);
un dispositif portable de réception d'énergie (50) comprenant une bobine de réception d'énergie (54), ledit dispositif portable de réception d'énergie (50) pouvant être positionné de façon prédéterminée dans l'espace par rapport audit dispositif d'alimentation en énergie (10) pour coupler électro-magnétiquement ladite bobine de réception d'énergie (54) dudit dispositif de réception d'énergie (50) et la bobine d'alimentation en énergie (18) dudit dispositif d'alimentation en énergie (10); et
des moyens de détection d'état (30, 70) pour fournir ledit signal de détection d'état,
caractérisé par un condensateur (20) relié en parallèle à ladite bobine d'alimentation en énergie (18) pour établir une résonance à une fréquence de résonance qui est au moins une fois et demi supérieure à ladite fréquence prédéterminée, et dans lequel ledit dispositif portable de réception d'énergie (50) comprend en outre une batterie de secours (68) pour fournir l'alimentation nécessaire au fonctionnement de moyens de détection de niveau de charge (64), et comprend également un commutateur (74) fonctionnant en dépendance du signal de détection d'état et reliant ladite batterie de secours (68) auxdits moyens de détection de niveau de charge (64) seulement lorsque ledit dispositif portable de réception d'énergie (50) est dans ladite orientation prédéterminée dans l'espace.

6. Système selon la revendication 5, dans lequel ledit commutateur (74) comprend un commutateur commandé électriquement (74) placé entre ladite batterie de secours (68) et lesdits moyens de détection de niveau de charge (64), le système comprenant en outre des moyens logiques (72) connectés pour commander ledit commutateur commandé électriquement (74), lesdits moyens logiques (72) répondant audit signal de détection d'état.

7. Système selon la revendication 5 ou 6, dans lequel un photocoupleur (66, 26) comprend une diode électroluminescente (66) montée dans ledit dispositif portable de réception d'énergie (50) et un élément récepteur de luminosité (26) monté dans ledit dispositif d'alimentation en énergie (10), ladite diode électroluminescente (66) étant activée par un signal d'état en provenance desdits moyens de détection de niveau de charge (64) et étant montée pour fournir de la lumière audit élément récepteur de luminosité (26) lorsque ledit dispositif portable de réception d'énergie (50) est dans ladite orientation prédéterminée dans l'espace par rapport audit dispositif d'alimentation en énergie (10), ledit élément récepteur de luminosité (26) fournissant son signal auxdits moyens de commande de commutation (28) lorsque ladite source rechargeable (58) en énergie électrique a besoin d'être rechargée.

8. Système d'alimentation et de réception d'énergie sans contact comprenant :
un dispositif (10) d'alimentation en énergie comprenant une bobine d'alimentation en énergie (18), un convertisseur de fréquence (16) pour fournir un signal à une fréquence prédéterminée, un commutateur (14) répondant à l'application d'un signal de commutation pour connecter ensemble ledit convertisseur de fréquence (16) et ladite bobine d'alimentation en énergie (18) pour fournir un signal à ladite fréquence prédéterminée à ladite bobine d'alimentation en énergie (18) lorsque ledit signal de commutation est fourni audit commutateur (14), ledit dispositif d'alimentation en énergie (10) comprenant en outre des moyens de commande de commutation (31, 32) répondant à un signal de détection d'état pour fournir ledit signal de commutation audit commutateur (14); et
un dispositif portable de réception d'énergie (50) comprenant une bobine de réception d'énergie (54), ledit dispositif portable de réception d'énergie (50) pouvant être positionné de façon prédéterminée dans l'espace par rapport audit dispositif d'alimentation en énergie (10) pour coupler électro-magnétiquement ladite bobine de réception d'énergie (54) dudit dispositif de réception d'énergie (50) et la bobine d'alimentation en énergie (18) dudit dispositif d'alimentation en énergie (10);
caractérisé par un condensateur (20) relié en parallèle à ladite bobine d'alimentation en énergie (18) pour établir une résonance à une fréquence de résonance qui est au moins une fois et demi supérieure à ladite fréquence prédéterminée, dans lequel ledit dispositif de réception d'énergie (50) comprend une source rechargeable (58) en énergie électrique et des moyens de détection de niveau de charge (64) reliés à ladite source rechargeable (58) en énergie électrique pour fournir un signal d'état indiquant que ladite source rechargeable (58) en énergie électrique a besoin d'être rechargée, un oscillateur (76) actionné par ledit signal d'état et relié pour fournir un signal à ladite bobine de réception d'énergie (54), et dans lequel ledit dispositif d'alimentation en énergie (10) comprend un détecteur de signal (31) relié à ladite bobine d'alimentation en énergie (18) pour la détection dudit signal fourni par ledit oscillateur (76) à ladite bobine de réception d'énergie (54), ledit détecteur de signal (31) fournissant ledit signal de commutation audit commutateur (14) pour interconnecter ledit convertisseur de fréquence (16) et ladite bobine d'alimentation en énergie (18) lorsque ledit oscillateur (76) fournit ledit signal à ladite bobine de réception d'énergie (54).

9. Système selon l'une quelconque des revendications 1 à 8, dans lequel ladite fréquence de résonance est de l'ordre d'au moins deux fois ladite fréquence prédéterminée.
